# EUROPÄISCHE PATENTSCHRIFT

(11) **EP 3 969 970 B1**
(45) Veröffentlichungstag und Bekanntmachung des Hinweises auf die Patenterteilung: **27.12.2023**
(21) Anmeldenummer: 20726285.8
(22) Anmeldetag: 09.05.2020
(51) Int. Cl.: H04L 41/22, H04L 41/08, H04L 41/00, H04L 41/082, H04L 43/0817

(54) **VERFAHREN ZUR DARSTELLUNG UND BEDIENUNG VON PRODUKTIONSMITTELN, INSBESONDERE FÜR DIE KUNSTSTOFFVERARBEITENDE INDUSTRIE**
METHOD FOR DISPLAYING AND OPERATING PRODUCTION MEANS, IN PARTICULAR FOR THE PLASTICS PROCESSING INDUSTRY
PROCÉDÉ DE REPRÉSENTATION ET DE COMMANDE DE MOYENS DE PRODUCTION, EN PARTICULIER POUR L'INDUSTRIE DE TRANSFORMATION DES PLASTIQUES

(30) Priorität: 15.05.2019 AT 504372019
(43) Veröffentlichungstag der Anmeldung: 23.03.2022
(73) Patentinhaber: Wittmann Technology GmbH, 1220 Wien (AT)
(72) Erfinder: RELLA, Johannes, 2671 Payerbach (AT); WITTMANN, Michael Peter, 2100 Leobendorf (AT)
(74) Vertreter: Felfernig, Oliver
(86) Internationale Anmeldenummer: PCT/AT2020/060190
(87) Internationale Veröffentlichungsnummer: WO 2020/227744

(56) Entgegenhaltungen:
- EP-A1- 2 453 326
- WO-A1-2008/071669
- AT-B1- 501 786
- AT-U1- 11 172

## Beschreibung

Die Erfindung betrifft ein Verfahren zur Darstellung und Bedienung von Produktionsmitteln insbesondere für die Kunststoffverarbeitende Industrie, wie es in dem Oberbegriff des Anspruches 1 beschrieben ist.

Aus der AT 501 786 B1 ist eine Steuereinrichtung für eine oder mehrere Spritzgießmaschine mit jeweils einer elektronischen speicherprogrammierbaren Steuerung bekannt, bei der ein gesonderter Computer vorgesehen ist, der Prozessdaten von der Spritzgießmaschine (SGM), insbesondere der speicherprogrammierbaren Steuerung, empfängt und verarbeitet, wobei diese Prozessdaten von dem gesonderten Computer zu digitalen Bilddaten verarbeitet werden, die an den der Spritzgießmaschine zugeordneten Bildschirm gesandt und dort als Bild dargestellt werden. Dabei sind auf dem gesonderten Computer für jede Spritzgießmaschine User-Interface-Funktionalitäten, also die Bilder, installiert bzw. realisiert, um die Berechnung von Bilddaten zu ermöglichen. Von der speicherprogrammierbaren Steuerung werden somit nur Prozessdaten übertragen. Dadurch wird erreicht, dass die speicherprogrammierbare Steuerung nicht überdimensioniert werden muss, um die Visualisierung am Bildschirm der Spritzgießmaschine realisieren zu können, da ausschließlich vom Computer die Bilder berechnet und an die Spritzgießmaschine zurückgesendet werden.

Weiters ist aus der AT 11 172 U1 eine Vorrichtung zur Fernüberwachung/-wartung einer Spritzgießmaschine, bekannt, bei dem ein Software-Oszilloskop von einem weiteren Computer aus konfigurierbar ist.

Auch die WO 2008/071669 A1 und EP 2453326A zeigen keinerlei Ausgestaltungen, die das Herunterladen der Visualisierung des Produktionsmittels vom Produktionsmittel nach Aktivieren eines Symbols an der Bedieneinheit durchführt.

Es sind bereits Systeme bekannt, bei denen durch entsprechende Programmierung bzw. manuelle Zusammenstellung von Produktionsmitteln eine Industrieanlage auf einer zentralen Bedieneinheit abgebildet werden kann, die durch entsprechende Verknüpfungen über ein Netzwerk mit dem tatsächlichen Produktionsmittel zum Übertragen von Daten verbunden werden kann. Nachteilig ist hierbei, dass für die Einrichtung der Industrieanlage an einer zentralen Bedieneinheit ein hoher Zeitaufwand notwendig ist.

Nachteilig ist hierbei auch, dass ein Softwareupdate auf einem Produktionsmittel mitunter auch ein Softwareupdate auf der oder den zentralen Bedieneinheiten erfordert, da die neuere Softwareversion zum Beispiel erweiterte Eingabemöglichkeiten oder erweiterte anzuzeigende Datenstrukturen bietet. Die Softwarestände zweier oder mehrerer Bedieneinheiten müssen somit händisch dem Softwarestand in den Produktionsmitteln angepasst werden.

Nachteilig ist ebenfalls, dass bei einer modularen und flexiblen Zusammenstellung von Produktionsmitteln zu einer Industrieanlage, wie es in der Spritzgießindustrie der Fall ist, um unterschiedliche Spritzgießteile zu produzieren, alle möglichen Produktionsmittel und idealer Weise alle möglichen Softwareversionen dieser Produktionsmittel bereits auf der oder den zentralen Bedieneinheiten vorhanden sein müssen, damit eine vollumfängliche und richtige Darstellung der Bedienoberfläche des jeweiligen Produktionsmittels möglich ist.

Beispielsweise ist aus der EP 0 852 031 B1 ein Automatisierungssystem für das Steuern und Regeln von Maschinen und Anlagen der Kunststoffindustrie, insbesondere für Blasformmaschinen, mit speicherprogrammierbaren Steuerungen (SPS) bekannt, über die Steuer- und Regelfunktionen der Maschinen und Anlagen in gewünschter Weise vorgenommen werden können und die zumindest ein Bedien- und Beobachtungsgerät sowie einen Lokalbus aufweisen, wobei die speicherprogrammierbaren Steuerungen (SPS) elektrische Schaltungseinzelteile nachbildende digitale Technologiebausteine (10) aufweisen, mit denen die gewünschten Steuer- und Regelfunktionen modular realisierbar sind und die über Datenschnittstellen miteinander und mit der Anwenderplattform verbunden sind, bekannt.

Von Integrationen von Industrierobotern in kunststoffverarbeitenden Maschinen beispielsweise WO 2006/042788 A1, ist des Weiteren die Übertragung des gesamten Bildschirminhaltes von Subsystemen, wie Industrieroboter und Peripheriegeräten zur kunststoffverarbeitenden Maschine bekannt. Ebenso sind kommerziell oder via open-source verfügbare Softwareprogramme bekannt, die mit Hilfe desselben Mechanismus (VNC - Bildschirmspiegelung) eine komplette Bildschirmübertragung und Bedienung via Touch von einem Netzwerkteilnehmer zu einem anderen zulassen. Nachteilig ist hierbei, dass das Übertragen des gesamten oder teilweisen Bildschirminhaltes ein großes Datenvolumen darstellt und somit die Bandbreite des Netzwerks belastet wird und nicht ausreicht, um beispielsweise Produktionsabläufe mit einer ausreichenden Bildwiederholfrequenz oder großer Auflösung zu übertragen, d.h. die Bilder "rucken".

Aufgabe der Erfindung ist es daher ein Verfahren zur Darstellung und Bedienung von Produktionsmitteln, insbesondere für die Kunststoffverarbeitende Industrie, der eingangs genannten Art zu schaffen, mit der einerseits die zuvor beschriebenen Nachteile vermieden werden und andererseits die Bedienerfreundlichkeit wesentlich erhöht wird.

Die Aufgabe wird durch die Erfindung gelöst.

Das erfindungsgemäße Verfahren ist dadurch gekennzeichnet, dass auf der zentralen Bedieneinheit Symbole für die über ein Netzwerk angebundenen Produktionsmittel vorhanden und auswählbar sind, wobei nach Auswahl eines oder mehrerer Symbole am Bildschirm der Bedieneinheit die Visualisierungskomponente aus dem zugehörigen Produktionsmittel auf die Bedieneinheit übertragen und ausgeführt wird und anschließend eine vollständige Darstellung und Bedienung durch die Zusammenarbeit der nun an der Bedieneinheit vorhandenen Visualisierungssoftware dieses Produktionsmittels und der weiterhin dezentral im Produktionsmittel laufenden Steuerungssoftware erfolgt, wobei die Übertragung der Visualisierungskomponente nach Möglichkeit vorzugsweise nur beim ersten Aufruf dieses Produktionsmittels übertragen wird, anschließend in der Bedieneinheit vorzugsweise in einem Cache gespeichert bleibt, um bei der nächsten Auswahl des dem Produktionsmittel zugehörigen Symboles ein schnelleres Ansprechverhalten zu erzielen, wobei sich die Funktionalität aus dem Zusammenspiel von modularer Software, insbesondere der Steuerungssoftware, in den Steuerungen der unterschiedlichen Produktionsmittel und der übergeordneten Software, insbesondere der Visualisierungssoftware, in der oder den Bedieneinheiten in der Form ergibt, dass nur die Softwaremodule, die für die Visualisierung relevant sind, auf eine externe Bedieneinheit, beispielsweise einen Computer, übertragen werden und diese mit den prozessrelevanten Softwaremodulen, die auch weiterhin in der oder den Steuerungen des Produktionsmittels verbleiben, zusammenarbeiten.

Vorteilhaft ist hierbei, dass der Bediener von einem zentralen Platz aus alle Produktionsmitteln bedienen und überwachen kann, wobei ihm hierfür eine passende Bedienoberfläche angezeigt wird, die auf dem Produktionsmittel hinterlegt ist und direkt vom Produktionsmittel auf die zentrale Bedieneinheit geladen wurde und sodann auf der zentralen Bedienoberfläche zur Ausführung gebracht wird. Typischerweise, aber nicht zwingend notwendig, entspricht die für die zentrale Bedieneinheit auf dem Produktionsmittel hinterlegte Bedienoberfläche, mindestens der Bedienoberfläche auf dem Produktionsmittel. Damit kann der Anwender mit der zum jeweiligen Produktionsmittel gehörenden Bedienlogik arbeiten und benötigt somit keine Umschulung auf neue Menüstrukturen oder Funktionalitäten. Vorteilhaft ist des Weiteren, dass durch die lokale Ausführung der Visualisierungskomponente auf der zentralen Bedieneinheit, gegebenenfalls unter Ausnutzung von vorhandener Grafikbeschleunigungshardware (GPU), und die effiziente Datenübertragung sogar eine hochauflösende virtuelle Darstellung der jeweiligen Bedieneinheit eines Produktionsmittels möglich ist. Sollte es sich bei dem Produktionsmittel um einen Industrieroboter handeln, besteht damit sogar die Möglichkeit, den Bewegungsablauf des oder der Industrieroboter nach zu verfolgen und nicht nur, wie aus dem Stand der Technik bekannt, Daten bzw. Werte angezeigt zu bekommen. Dabei ist es auch möglich, dass auf der zentralen Bedieneinheit die jeweiligen Szenen vergrößert dargestellt werden, um den Bewegungsvorgang oder Animationen genauer nachvollziehen zu können. Somit ist es möglich, dass durch entsprechende Analysen eine Optimierung des Bewegungsablaufs zur Erhöhung der Produktionsgeschwindigkeit und/oder zum Vermeiden von Fehlern durchgeführt werden kann. Ebenso können auf der zentralen Bedieneinheit gegebenenfalls vorhandene Animationen des Produktionsmittels ruck frei dargestellt werden.

Eine Maßnahme ist von Vorteil, bei der die Übertragung der Softwarekomponente für die Visualisierung eines Produktionsmittels nach Möglichkeit vorzugsweise nur beim ersten Aufruf dieses Produktionsmittels übertragen wird, anschließend in der Bedieneinheit vorzugsweise in einem Cache gespeichert bleibt, um bei der nächsten Auswahl des Produktionsmittels ein schnelleres Ansprechverhalten zu erzielen. Damit wird erreicht, dass die zu startende Visualisierungskomponente bereits lokal auf der zentralen Bedieneinheit vorgehalten wird und somit sofort gestartet werden kann. Es entfällt die Zeit, die zum Übertragen der Softwarekomponente notwendig ist. Haben beispielsweise zwei oder mehr Produktionsmittel eines bestimmten Typs den gleichen Softwarestand betreffend die Visualisierungskomponente, so reicht es, wenn bei Verbindung zum ersten Gerät die Software übertragen wird. Für das zweite und jedes weitere Gerät ist dies nicht mehr notwendig. Für das zweite Gerät und jedes weitere Gerät wird einfach eine weitere Instanz der bereits lokal vorhandenen Visualisierungskomponente gestartet. Jede Instanz verbindet sich aber zum jeweiligen anderen Gerät und zeigt daher auch die Informationen für genau dieses Gerät an.

Im Speicher der zentralen Bedieneinheit werden mehrere Softwareversionen von Visualisierungskomponenten von Produktionsmitteln gleichen Typs gehalten, sodass immer jene Softwareversion geladen wird, die auch exakt zum Softwarestand des verbundenen Produktionsmittels passt. Dadurch wird erreicht, dass immer nur jene Funktionen durchgeführt werden können, die auch von der entsprechenden Version unterstützt werden, wodurch die Betriebssicherheit gewährleistet werden kann und Fehlerquellen durch falsche Funktionseinstellungen, die gar nicht unterstützt werden, verhindert werden.

Vorteilhaft sind die Maßnahmen, bei der sich die Funktionalität aus dem Zusammenspiel von modularer Software, insbesondere der Steuerungssoftware, in den Steuerungen der unterschiedlichen Produktionsmittel und der übergeordneten Software, insbesondere der Visualisierungssoftware, in der oder den Bedieneinheiten in der Form ergibt, dass nur die Softwaremodule, die für die Visualisierung relevant sind, auf eine externe Hardwareplattform, beispielsweise einen Computer, übertragen werden und diese mit den prozessrelevanten Softwaremodulen, die auch weiterhin in der oder den Steuerungen des Produktionsmittels verbleiben, zusammenarbeiten. Dadurch wird erreicht, dass die Visualisierungskomponenten für ein beliebiges Produktionsmittel viele Male an unterschiedlichen Lokalitäten ausgeführt werden können, wobei sich alle Visualisierungskomponenten auf ein- und dasselbe Gerät verbinden und mit der Steuerung dieses Geräts kommunizieren und Informationen aus dieser Steuerung den Bedienern an den unterschiedlichen Lokalitäten zur Verfügung stellen. Beispielsweise können bei einer größeren Anlage an mehreren Stellen Bedienterminals angebracht sein. Auf diesen Bedienterminals läuft jeweils eine Instanz der Visualisierungskomponente. Oder es gibt mehrere zentrale Bedieneinheiten innerhalb der Firma oder auch an verteilten Firmenstandorten.

Von Vorteil sind die Maßnahmen, bei denen mehrere Instanzen der Visualisierungskomponente desselben oder unterschiedlicher Produktionsmittel gleichzeitig auf der zentralen Bedieneinheit unabhängig voneinander laufen, sodass unterschiedliche Bildschirmseiten und somit unterschiedliche Informationen aus der oder den Steuerungen gleichzeitig oder nebeneinander dargestellt werden. Dadurch ist es möglich, dass mehrere Instanzen ein und derselben Visualisierungskomponente und desselben Produktionsmittels auf der zentralen Bedienoberfläche gestartet werden, wobei unterschiedliche Bildschirmseiten und somit unterschiedliche Informationen aus der Steuerung gleichzeitig und nebeneinander dargestellt werden können. Dadurch wird erreicht, dass der Bediener einen besseren Überblick über den Zustand des Produktionsmittels erhält, da er mehrere frei wählbare Bildschirmseiten mit entsprechenden Informationen neben einander angezeigt bekommt.

Von Vorteil sind die Maßnahmen, bei denen die Kommunikation zwischen der Visualisierungskomponente, insbesondere der Visualisierungssoftware, in der Bedieneinheit und der Steuerungssoftware im Produktionsmittel in Teilen oder gänzlich über das Netzwerkprotokoll OPC UA erfolgt. Das Netzwerkprotokoll OPC UA erlaubt eine effiziente Übertragung der Zustände des Produktionsmittels an die Visualisierungskomponenten. Die Visualisierungskomponenten können sich hierbei beispielsweise von den Produktionsmitteln benachrichtigen lassen, wenn bestimmte Zustandsänderungen eintreten. Die Visualisierungskomponenten müssen daher nicht laufend nach Zustandsänderungen fragen. Der Kommunikationskanal und dessen Bandbreite für die Datenübertragung wird dadurch nicht unnötig überlastet.

Es sind aber auch die Maßnahmen von Vorteil, bei der sich die Visualisierung des Produktionsmittels auf der zentralen Bedieneinheit dem verfügbaren Platz auf der Anzeigeeinheit bzw. Bildschirm des Computers anpasst oder vom Bediener anpassen lässt und somit auf der zentralen Bedieneinheit mehr oder detailliertere Informationen als auf dem Display des Produktionsmittels selbst dargestellt werden. Dadurch können bei der Überwachung des Produktionsablaufes mehrere Daten gleichzeitig angezeigt und verfolgt werden, um eine Optimierung des Produktionsablaufes zu vereinfachen oder aber auch auftretende Fehlermeldungen auszuforschen. An den Produktionsmitteln stehen dem Wartungspersonal meist nur kleinere Displays zur Verfügung, sodass beispielsweise durch den Einsatz eines Laptops, der beispielsweise über WLan mit dem Netzwerk verbunden ist, dieser als zentrale Bedieneinheit genützt werden kann.

Es sind die Maßnahmen vorteilhaft, bei denen sich die Visualisierung des Produktionsmittels auf der zentralen Bedieneinheit der gegenüber dem Produktionsmittel geänderten Hardwareumgebung, beispielsweise unterschiedlicher Laufwerke oder Speichersysteme, auf der Anzeigeeinheit des Computers anpasst und somit dem Benutzer auf der zentralen Bedieneinheit andere, eingeschränkte oder erweiterte Speicherorte angeboten werden als auf dem Display des Produktionsmittels. Dadurch ist es möglich, dass von der zentralen Bedieneinheit, die oftmals einen leistungsstärkeren Prozessor und mehr und zuverlässigeren Speicherplatz aufweist, Daten gesammelt und entsprechend gespeichert werden können. Dabei ist es möglich, dass beispielsweise von der zentralen Bedieneinheit sämtliche übertragene Parameter, Werte, Fehlermeldungen einer Schicht gesammelt werden und anschließend automatisch gespeichert werden, sodass jederzeit eine Rückverfolgung und Analyse dieser Schicht möglich ist.

Vorteilhaft sind die Maßnahmen, bei denen bei Entfernen oder Hinzufügen eines Produktionsmittels im Netzwerk, insbesondere eines mobilen Peripheriegerätes, beispielsweise eines Temperiergerätes, Granulattrockners, -förderers, Dosiergerätes, etc. auf Grund von geändertem Bedarf für die Produktion eines Spritzgießteils, eine entsprechende automatische Anpassung der Darstellung der Symbole an der oder den zentralen Bedieneinheiten erfolgt oder zur Anzeige oder Kommunikation angeboten werden. Dadurch wird erreicht, dass eine automatische Anpassung der Bedienoberfläche erfolgt, sodass Rückmeldungen vom Wartungspersonal zur Veränderung der Produktionsmittel, die oftmals nur unvollständig erfolgten, nicht mehr notwendig sind. Somit können die Wartungsarbeiten ohne Rückmeldung der geänderten Zusammensetzung einer Arbeitszelle vorgenommen werden.

Es sind aber auch die Maßnahmen von Vorteil, bei denen Verknüpfungen von Produktionsmitteln zu physischen Produktionszellen bzw. Arbeitszellen, die sich aus der Netzwerktopologie ergeben und sich jederzeit neu ergeben können, sich auch auf der oder den zentralen Bedieneinheiten widerspiegeln. Dadurch kann eine vollständige Darstellung der Zusammenarbeit der einzelnen Produktionsmittel mit dem weiteren tatsächlichen Produktionsmittel und/oder den physischen Produktionszellen bzw. Arbeitszellen ermöglicht werden. Derartige physische Produktionsmittel bzw. Arbeitszellen dienen dazu, dass die Zusammengehörigkeit mehrerer Produktionsmittel, die vorzugsweise nicht in einer Arbeitszelle arbeiten, zum Erzeugen eines Spritzgiessteils definiert werden, d.h., dass beispielsweise mehrere in der Produktionshalle verteilt aufgestellte Temperiergeräte, die mit unterschiedlichsten Spritzgießmaschinen verbunden sind, diesen Spritzgießmaschinen virtuell zugeordnet werden.

Dadurch wird erreicht, dass der Bediener an der zentralen Bedieneinheit die Zusammenstellung der Arbeitszellen nicht im Detail kennen muss und auch nicht wissen muss unter welcher Adresse, welches Peripheriegerät erreicht werden kann.

Von Vorteil sind die Maßnahmen, bei denen die Software, insbesondere die Visualisierungssoftware, der zentralen Bedieneinheit auch Daten, beispielsweise digitale oder analoge Zustände, Qualitätsdaten, Prozessparameter, Variablenwerte, vorzugsweise über OPC UA aus den angeschlossenen Produktionsmitteln auslesen kann und diese produktionsmittelübergreifend oder arbeitszellenübergreifend aufbereiten, auswerten, in Beziehung setzen, darstellen oder speichern kann. Dadurch kann der laufende Produktionsablauf auf der Bedieneinheit mitverfolgt werden. Dabei ist es auch möglich, dass sich die virtuelle Darstellung entsprechend den überlieferten Daten verändert, sodass sich beispielsweise der Produktionsvorgang eines Spritzgiessteils an der Bedieneinheit darstellen und nachverfolgen lässt, d.h., dass nicht nur die Daten, Werte usw. dargestellt werden, sondern dass diese auch in Beziehung gebracht werden und beispielsweise die Prozessparameter der Spritzgießmaschine, die Temperatur der Kühlkanäle der Spritzgießform, die Trocknungstemperatur des Granulats, das Mischungsverhältnis unterschiedlicher Granulate, Additiver und Farben, etc. nachvollzogen werden können.

Die Maßnahmen sind von Vorteil, bei denen die Software, insbesondere die Visualisierungssoftware, der zentralen Bedieneinheit auch Alarme oder Fehlermeldungen oder Benutzerinteraktionen, vorzugsweise über OPC UA, aus den angeschlossenen Produktionsmitteln auslesen kann und diese produktionsmittelübergreifend oder arbeitszellenübergreifend aufbereiten, auswerten, in Beziehung setzen, darstellen oder speichern kann. Dadurch kann auf einen Blick der Status des gesamten Produktionsablaufs in der Industrieanlage erfasst werden und es kann optimal das Wartungspersonal zu dem entsprechenden Produktionsmittel beim Auftreten von Fehlermeldungen eingesetzt werden. Auch können Folgefehler, d.h. Ausfall von Produktionsmitteln, die durch den Ausfall vorherhergehender Produktionsmittel ausgelöst werden, erkannt werden.

Es sind auch die Maßnahmen von Vorteil, bei denen sich ein Benutzer an der zentralen Bedieneinheit mit einem Benutzerlevel anmelden kann und der damit verbundene Benutzerlevel automatisch, oder nach einer vorgegebenen aber anpassbaren, Zuordnungstabelle auf die Benutzerlevel der Visualisierungskomponente der Produktionsmittel angewandt wird. Dadurch wird erreicht, dass berechtigte Personen sich nicht auf jedem Produktionsmittel separat anmelden müssen, wodurch sich einerseits eine Zeitersparnis ergibt und die Person sich weiters nur 1 Passwort für die zentrale Bedieneinheit, nicht aber für jedes Produktionsmittel merken muss.

Vorteilhaft sind die Maßnahmen, bei denen der Benutzer die Anzeigesprache der zentralen Bedieneinheit an der zentralen Bedieneinheit verändern kann, wobei die ausgewählte Sprache auch automatisch für die in der zentralen Bedieneinheit angezeigten Visualisierungskomponenten der Produktionsmittel verwendet wird bzw. als Voreinstellung fungiert.

Damit muss der Bediener, oftmals auch Fachpersonal aus einem anderen Land, die Anzeigesprache zum Überwachen der Industrieanlage nicht für jedes Produktionsmittel separat, sondern nur einmal für sich einstellen.

Von Vorteil sind die Maßnahmen, bei denen auf der zentralen Bedieneinheit eine konfigurierbare oder automatisch konfigurierte Übersicht über die Zustände, beispielsweise den Betriebszustand, der angeschlossenen Produktionsmittel dargestellt wird. Dadurch wird erreicht, dass der Betriebszustand der Produktionsmittel übersichtlich dargestellt wird und z.B. Fehlermeldungen schneller erkannt werden und diese somit rascher behoben werden können, sodass die Stillstandszeit des Produktionsmittels und/oder der gesamten Arbeitszelle verkürzt werden kann.

Von Vorteil ist die Maßnahme, wonach von der zentralen Bedieneinheit aus ein Softwareupdate der angeschlossenen Produktionsmittel angestoßen werden kann. Damit wird erreicht, dass der Bediener das Einspielen von Softwareupdates in die Produktionsmittel direkt von der zentralen Bedieneinheit vornehmen oder zumindest vorbereiten kann, sodass das Produktionsmittel softwaremäßig auf Letztstand gebracht wird, sowie länger in Produktion bleiben kann und damit einerseits die Stillstandszeit für eine solche Wartung verringert wird andererseits auch der Zeitaufwand für den Bediener/Wartungsfachmann minimiert wird. Hierbei ist es beispielsweise möglich, dass bei einer oder mehreren Arbeitszelle für mehrere darin befindliche Produktionsmittel die Updates an der Bedieneinheit vorbereitet werden, sodass gleichzeitig beim Abschalten der Arbeitszelle für Wartungszwecke oder eines Stillstandes sämtliche Updates automatisch installiert werden. Somit muss das Wartungspersonal nicht bei jedem Produktionsmittel das Update manuell installieren.

Schließlich sind die Maßnahmen von Vorteil, bei denen die Produktionsmittel zumindest eine Spritzgießmaschine, einen Roboter oder eine Automatisierungsanlage, ein Temperiergerät, ein Kühlgerät, einen Durchflussregler, einen Granulattrockner oder -förderer oder ein Dosiergerät oder eine Arbeitszellensteuerung umfassen. Dadurch können sämtliche für die Herstellung eines Spritzgießteils benötigten Geräte virtuell an der Bedieneinheit dargestellt werden.

Grundsätzlich kann gesagt werden, dass durch die erfindungsgemäße Lösung eine optimale Steuerung und Überwachung einer Industrieanlage bestehend aus einer Vielzahl von Produktionsmitteln durchgeführt werden kann, wobei bei einem Ausfall eines oder mehrerer Produktionsmittel die Stillstandszeit möglichst kurzgehalten werden kann, da durch den visuellen Ablauf auf der Bedieneinheit auch die Fehlermeldungen sofort angezeigt werden und Gegenmaßnahmen zum Verhindern von Folgefehlern vorgenommen werden können.

Die Erfindung wird an Hand mehrerer in den Zeichnungen dargestellten Ausführungsbeispielen näher erläutert, wobei die Erfindung nicht auf die gezeigten Darstellungen, insbesondere den Aufbau und die Zusammensetzung der Anlagen, begrenzt ist.

Es zeigen:
- Fig. 1: ein Übersichtbild einer kunststoffverarbeitenden Industrieanlage in einer Arbeitszelle, in vereinfachter, schematischer Darstellung;
- Fig. 2: eine schematische Darstellung einer Industrieanlage mit mehreren vernetzten Arbeitszellen, in vereinfachter, schematischer Darstellung;
- Fig. 3: eine schematische Darstellung der zentralen Bedienereinheit, insbesondere eine Bildschirmdarstellung der erfassten Produktionsmittel;
- Fig.4a: eine Bildschirmdarstellung die Visualisierungskomponenten zweier erfasster Symbole an der zentralen Bedieneinheit, in vereinfachter, schematischer Darstellung;
- Fig.4b: eine weitere Bildschirmdarstellung derselben Visualisierungskomponente in zweifacher Ausführung in unterschiedlichem Anzeigemodus, in vereinfachter, schematischer Darstellung;
- Fig.4c: eine weitere Bildschirmdarstellung mit einer Übersichtsseite zu mehreren Symobolen und drei weiteren Visualisierungskomponenten unterschiedlicher Produktionsmittel, in vereinfachter, schematischer Darstellung;
- Fig. 5: eine Übersichtsdarstellung einer globalen Vernetzung mit externem Control Room, in vereinfachter, schematischer Darstellung;
- Fig. 6: eine weitere schaubildliche Darstellung einer Kunststoffindustrieanlage deren Produktionsmittel mit mehreren Control Rooms, einer davon ausgeführt als Bestandteil einer Zentralförderanlage, teilweise drahtlos, vorzugsweise per Wlan, verbunden sind, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

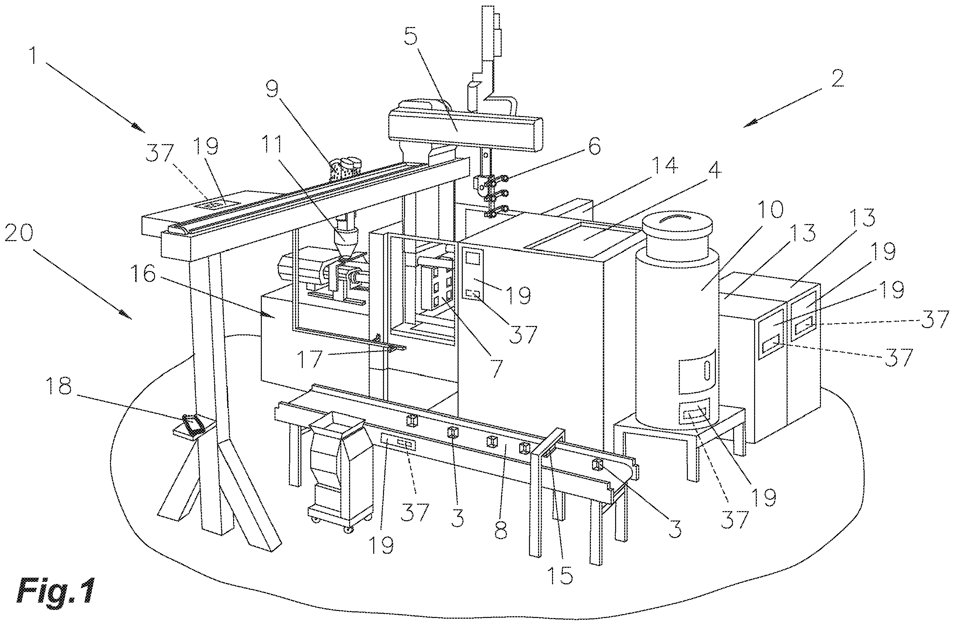

In den Fig. 1 bis 6 ist eine Industrieanlage 1 für Spritzgießanwendungen gezeigt, bei der die einzelnen Produktionsmittel 2 zum Erzeugen eines oder mehrerer Produkte/Halbprodukte oder Spritzgießteile 3 zusammen geschaltet sind. Als Verarbeitungsmaschine wird vorzugsweise eine Spritzgießmaschine 4, eingesetzt, der ein Roboter 5 bzw. Handhabungsautomat zum Entnehmen des hergestellten Spritzgießteils 3 zugeordnet ist. Dabei wird das Spritzgießteil 3 von einer Entnahmevorrichtung 6, insbesondere mit einem Greifer ausgestattet mit Greifzangen und/oder Saugdüsen, aus einer sich öffnenden Spritzgussform 7 entnommen und auf eine Vorrichtung, insbesondere ein Transportband 8, abgelegt.

Beispielsweise ist es möglich, dass für die Herstellung eines Spritzgießteils 3 Kunststoffgranulat oder -pulver über ein Granulatfördergerät 9 und eventuell über ein Dosiergerät 11 oder aus einem Granulattrockner 10 der Verarbeitungsmaschine 4 zugeführt wird. Über ein Temperiergerät 13 und/oder Kühlgerät kann die Spritzgussform 7 durch Zuführung eines Temperiermediums auf Betriebstemperatur gehalten werden bzw. entsprechend geheizt oder gekühlt werden, sodass eine optimale Verarbeitung des Kunststoffgranulates oder -pulvers, welches zum Einspritzen in die Spritzgussform 7 plastifiziert werden muss, ermöglicht wird.

Zusätzlich kann die Anlage eine Überwachungsvorrichtung 15, insbesondere ein Kamerasystem, aufweisen, um eine automatische Qualitätskontrolle des erzeugten Produktes 3 durchführen zu können. Ebenso sind sehr häufig vor- bzw. nachgeschaltete Automatisierungsanlagen 16 vorhanden, z.B. Angußabschneide-17, Zentrier-, Vereinzelungs-, Zuführstationen, Kisten-, Palettenstapelstationen, etc., die direkt in die Robotersteuerung bzw. Industrieanlage 1 eingebunden und von dieser über digitale oder analoge Signale oder andere Kommunikationsschnittstellen gesteuert werden. Die Erstellung der Ablauf- und Steuerlogik für den Roboter 5 bzw. Handhabungsautomat 5 und etwaige angeschlossene Automatisierungskomponenten 16 bzw. -anlagen erfolgt typischerweise im Teach-In-Verfahren, wozu eine entsprechende Teachbox 18 bzw. Robotsteuerung eingesetzt werden kann.

Damit die einzelnen Geräte eingestellt bzw. programmiert werden können, weisen diese vorzugsweise eine Steuerelektronik bzw. Steuerung 19, wie schematisch eingezeichnet, auf, wobei die Einstellung bzw. Programmierung über an den Geräten angeordneten Displays oder der Teachbox 18 eingegeben und angezeigt wird. Dabei kann über die Teachbox 18 mit den einzelnen Komponenten eine Verbindung aufgebaut werden, sodass eine für dieses Produktionsmittel 2 entsprechend hinterlegte Oberfläche aufgerufen wird. Selbstverständlich ist es möglich, dass auch über eine externe Komponente, die über eine Schnittstelle mit den Produktionsmitteln 2 verbunden ist, die Programmierung bzw. Einstellung erfolgen kann.

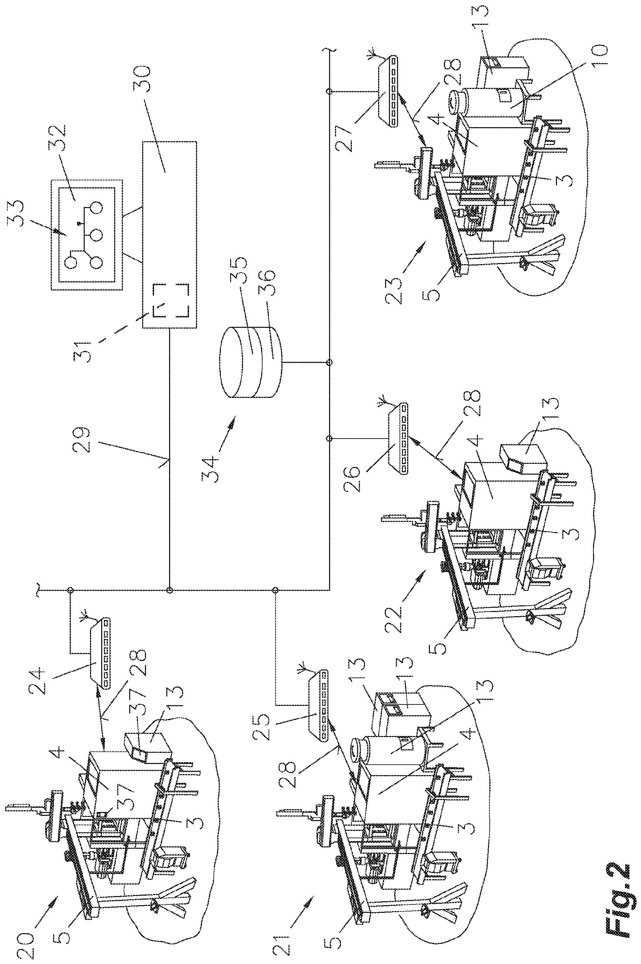

Der vollständigkeitshalber wird des Weiteren erwähnt, dass sämtliche Geräte mit entsprechenden Leitungen, insbesondere Spannungsversorgungen, Netzwerk- und Verbindungsleitungen, Flüssigkeitsversorgungsleitungen, Materialleitungen usw. verbunden sind, die in der gezeigten Darstellung der übersichtshalber nicht dargestellt wurden. Auch werden derartige Produktionsmittel 2 vorzugsweise zu einer oder mehreren Arbeitszellen 20 bis 23, wie in Fig. 2 schematisch dargestellt, zusammengefasst, wobei für die Kommunikation der Produktionsmittel 2 innerhalb und außerhalb der Arbeitszellen 20 bis 23 eine Arbeitszellensteuerung 24 bis 27 eingesetzt werden kann. Die Arbeitszellensteuerung 24 bis 27 ist über Leitungen 28 mit den Produktionsmittel 2 innerhalb der Arbeitszelle 20 bis 23 verbunden, wobei die Produktionsmittel 2 automatisch von der Arbeitszellensteuerung 24 bis 27 erkannt werden, worauf die Arbeitszellensteuerung 24 bis 27 einerseits die Kommunikation bzw. den Datenaustausch mit dem betriebsinternen Netzwerk 29, insbesondere einem Intranet und/oder einem Internet, und/oder einer zentralen Bedieneinheit 30, und andererseits mit den Produktionsmitteln 2 der Arbeitszelle 20 bis 23 durchführt und die direkte Kommunikation der Produktionsmittel 2 untereinander herstellt.

Bei derart großen Industrieanlagen 1 ist ein sehr hoher Aufwand für die Inbetriebnahme und Erfassung der einzelnen Produktionsmittel 2 notwendig. Da in den einzelnen Arbeitszellen 20 bis 23 oftmals gleiche Geräte bzw. Produktionsmittel 2 eingesetzt werden, ist es notwendig, dass bei Erfassung der Produktionsmittel 2 größte Sorgfalt der Monteure und Softwarebetreuer notwendig ist.

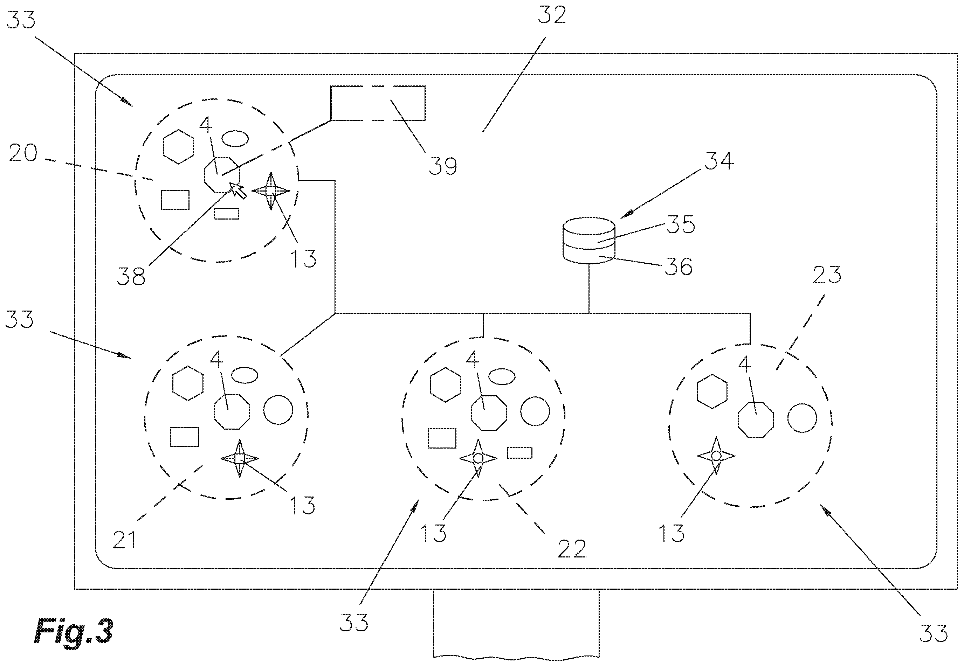

Erfindungsgemäß ist nunmehr vorgesehen, dass auf der zentralen Bedieneinheit 30, die mit dem Netzwerk 29 bzw. den Arbeitszellensteuerungen 24 bis 27 verbunden ist, eine automatische virtuelle Darstellung erzeugt wird, in dem in der zentralen Bedieneinheit 30 eine Visualisierungssoftware 31 aktiviert wird, die den Datenaustausch mit den Produktionsmittel 2 direkt oder mit den einzelnen Arbeitszellen 20 bis 23, insbesondere mit den Arbeitszellensteuerungen 24 bis 27, vornimmt und auf einem Bildschirm 32 bzw. Touchscreen einen schematischen Aufbau der Industrieanlage 1 vorzugsweise in Form von Symbolen 33 der eingesetzten Produktionsmittel 2 darstellt, d.h., dass auf der zentralen Bedieneinheit 30 Symbole 33 für die über das Netzwerk 29 angebundenen Produktionsmittel 2 oder die mit den Produktionsmitteln 2 in Zusammenhang stehenden Management-Tools 34 wie Konfigurationssysteme 35 oder Datenbanksysteme 36 vorhanden und auswählbar sind. Vorzugsweise werden für jede Type eines Produktionsmittels 2 unterschiedliche, vorzugsweise branchenübliche Symbole 33 dargestellt, sodass aufgrund der Symbole 33 bereits auf die in einer Arbeitszelle 20 bis 23 enthaltenen Geräte bzw. Produktionsmittel 2 rückgeschlossen werden kann. In der Fig. 3 wird die Spritzgiessmaschine 4 zur Verdeutlichung beispielsweise in Form eines Achtecks , das Temperiergerät 13 als Stern, usw. dargestellt.

Nach Auswahl eines oder mehrerer Symbole 33 am Bildschirm 32 eines Computers bzw. der zentralen Bedieneinheit 30 wird die Visualisierungskomponente 101 aus dem zugehörigen Produktionsmittel 2 oder dem Management-Tool 34 abgefragt und abgerufen bzw. geladen und auf dem Computer bzw. der zentralen Bedieneinheit 30 gestartet oder ausgeführt, d.h., dass eine Virtuelle Darstellung der Bedieneroberfläche des Produktionsmittels 2 und/oder eine virtuelle Darstellung des Produktionsmittels 2 am Bildschirm 32 dargestellt wird, die vorzugsweise direkt vom Produktionsmittel 2 geladen wird, da dadurch sichergestellt ist, dass beispielsweise bei neueren Geräten mit derselben Funktion, die zu älteren Geräten ein anderes Design aufweisen, dies auch am Bildschirm 32 erkennbar ist, sodass bei einem Tausch eines Gerätes immer dessen tatsächliche Darstellung verwendet wird. Anschließend ist eine vollständige Darstellung und Bedienung des bzw. der Produktionsmittel 2 durch die Zusammenarbeit der nunmehr an der Bedieneinheit 30 vorhandenen Visualisierungskomponente 101 und der dezentral in den Produktionsmitteln 2 laufenden Steuerungssoftware 37 möglich.

Hierbei ist es möglich, dass das Herunterladen aller Visualisierungskomponenten 101 von den tatsächlichen Produktionsmitteln 2 bzw. vom Management-Tool 34 durch Aktivierung eines Softwarebuttons durchgeführt werden kann. Es ist aber auch möglich, dass über einen Mauszeiger 38 oder direkte Auswahl auf einem Touchscreen selektierte Symbole 33 der Produktionsmittel 2 ausgewählt werden können. Dabei wird beispielsweise durch die Positionierung des Mauszeigers 38 auf dem Symbol 33 oder im Falle eines Touchscreens durch Direktauswahl, wie schematisch in Fig. 3 des Symbols 33 für die Spritzgiessmaschine 4 ein Fenster 39 geöffnet, indem beispielsweise die wichtigsten Konfigurationsdaten ablesbar sind und/oder auch ausgewählt werden können. Vorzugsweise werden die visuellen Darstellungen 101 bzw. die Visualisierungskomponenten 101 der Produktionsmittel 2 nur ein einziges Mal, insbesondere bei erstem Ausführen, heruntergeladen und werden anschließend in einen Cache 100 gespeichert, sodass diese bei späterer Wiederverwendung möglichst schnell zur Verfügung stehen. Die Software der zentralen Bedieneinheit 30 überprüft bei Auswahl eines Produktionsmittels 2 die bereits gespeicherten und somit lokal im Cache 100 vorhandenen Visualisierungskomponenten 101 der Produktionsmittel 2 auf Gleichheit des Typs des Produktionsmittels 2 und der Software-Version der Visualisierungskomponente 101 und initiiert nur bei Divergenz eine Übertragung der Softwarekomponente bzw. Visualisierungskomponente 101. Dabei erfolgt die Kommunikation zwischen Visualisierungskomponente 101 bzw. auch der Visualisierungssoftware (31), in der Bedieneinheit (30) und der Steuerungssoftware (37) im Produktionsmittel 2 in Teilen oder gänzlich über das Netzwerkprotokoll OPC UA.

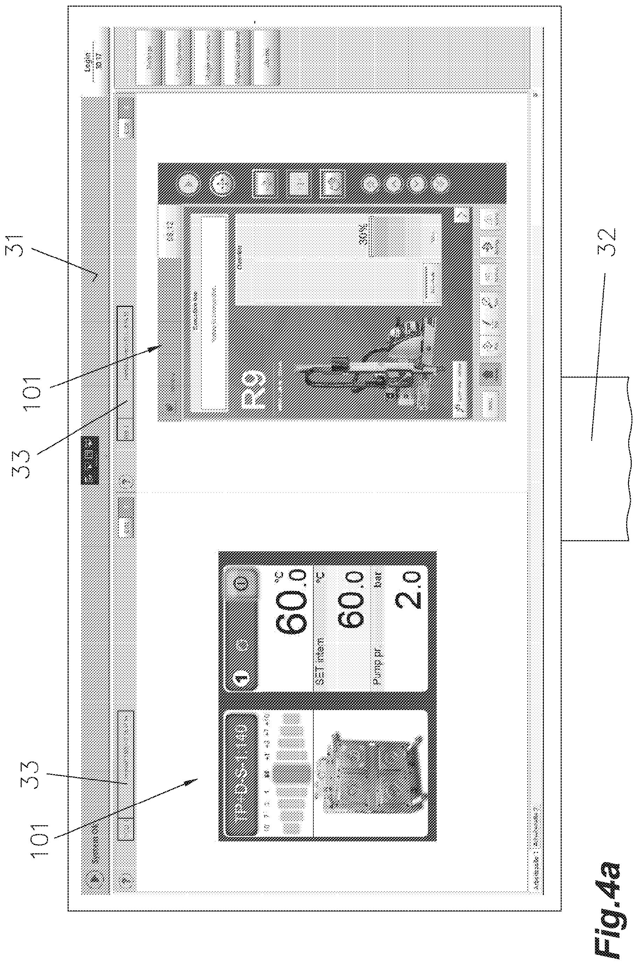

Der vollständigkeitshalber wird erwähnt, dass die Möglichkeit besteht, dass von einem Bediener zwischen der Symboldarstellung, gemäß Fig. 3 oder der virtuellen Darstellung der Produktionsmittel oder auch gemischt jederzeit umgeschalten werden kann. Auch ist es möglich, dass die visuellen Produktionsmittel 101 bzw. Visualisierungskomponenten 101 am Bildschirm 32 einzeln dargestellt werden oder dass die gesamten Arbeitszellen 20 bis 23 mit den Visualisierungskomponenten 101 ihrer Produktionsmittel 2 vergrößert oder verkleinert dargestellt werden können, wie dies aus der Fig. 4a bis 4c zu entnehmen ist, um beispielsweise den Entnahmevorgang des Spritzgießteils 3 durch den Roboter 5 genauer beobachten zu können. Neben einer topologischen Darstellung der Symbole anhand Ihrer Einordung in Arbeitszellen 20 bis 23 ist es auch möglich, dass der Bediener die dargestellten Symbole 33 für ein Produktionsmittel 2 oder dessen visuelle Darstellung bzw. Abbildung 101 nach eigenen Richtlinien frei am Bildschirm 32 verschieben, positionieren und gruppieren kann. Man kann also sagen, dass die anzuzeigenden Typen von Produktionsmitteln 2 sowie die optische Anordnung oder Aufteilung auf einen oder mehrere Bildschirme 32, Reiterkarten und ähnliches oder die Größe bzw. Skalierung der auf der zentralen Bedieneinheit 30 dargestellten Visualisierungskomponenten 101 vom Bediener konfiguriert werden kann oder anhand der Netzwerktopologie angezeigt wird oder werkseitig vorkonfiguriert und nicht veränderbar ist. Hierbei wird später noch näher auf die Figuren 4a bis 4c eingegangen.

Eine wesentliche Vereinfachung für den Bediener wird bei dem erfindungsgemäßen Verfahren dadurch erreicht, dass es dabei möglich ist, dass unterschiedlichste Instanzen bzw. Softwareversionen eines Produktionsmittels 2 durch die Symbole 33 ersichtlich sind und vor allem auch verarbeitet werden können. Beispielsweise ist dies durch das Symbol 33 für das Temperiergerät 13 in Fig. 3 dargestellt, wobei als Symbol 33 ein Stern mit unterschiedlichen Ausführungen für die unterschiedlichsten Instanzen bzw. Softwareversionen angezeigt werden. Das visuelle Temperiergerät 13 in den Arbeitszellen 20 und 21 weisen dabei die Version 1.1 auf, wogegen dasselbe Temperiergerät 13 in den Arbeitszellen 22 und 23 mit der Version 1.5 ausgestattet ist. Der Unterschied ist beispielsweise durch die innere Ausbildung des Sternes ersichtlich. Hierbei ist es jedoch auch möglich, dass die Instanzen bzw. Softwareversionen durch einfache Zahlen angezeigt werden. Dabei erfolgt die Visualisierung der Visualisierungskomponenten 101 in der Bedieneinheit 30 identisch zur Bedienung im tatsächlichen Produktionsmittel 2, wobei bei Softwareänderungen und/oder -erweiterungen im Produktionsmittel 2 in die Bedieneinheit 30 übertragen werden und dort zur Verfügung stehen, d.h., dass beispielsweise bei einem automatisch ausgeführten Softwareupdate der Arbeitszellensteuerung 24 bis 27 für ein oder mehrere Produktionsmittel 2 oder durch einen Monteur bei Wartungsarbeiten Vorort dies erkannt wird bzw. bei Beendigung des Softwareupdates dies von der Steuerungssoftware 37 an die Visualisierungssoftware 31 mitgeteilt und übertragen wird. Hierbei ist es auch möglich, dass vom Bediener an der zentralen Bedieneinheit 30 für ein bestimmtes Produktionsmittel 2 ein Softwareupdate aufgerufen und ausgeführt werden kann, indem er einfach das Symbol 33 oder dessen visuelle Darstellung aktiviert und in dem Fenster 39 oder einem entsprechenden Untermenü die Softwareaktualisierung aufruft, wodurch von der Visualisierungssoftware 31 die Übertragung des neuen Updates, welches die neue Steuerungssoftware 37 und auch die dazu passende Visualisierungskomponente 101 beinhaltet, an das Produktionsmittel 2 durchgeführt wird. Im Übrigen erfolgt auch eine automatische Erkennung oder Übertragung, wenn bei Wartungsarbeiten ein oder mehrere Produktionsmittel 2 ausgetauscht werden oder wenn ein Produktionsmittel 2 von einer Arbeitszelle 20 bis 23 in eine andere Arbeitszelle 20 bis 23 verschoben wird, um einen anderen Spritzgiessteil 3 herstellen zu können.

Vorteilhaft ist, wenn nach der Inbetriebnahme von einem oder mehreren Produktionsmitteln 2 beim erstmaligen Erkennen das virtuelle Produktionsmittel, insbesondere die Visualisierungskomponente 101 übertragen und gespeichert wird, sodass derart große Datenmengen nur sehr selten bis einmal übertragen werden müssen und anschließend nur noch die entsprechenden Prozessdaten, insbesondere die Ist-Werte, auf die Bedienereinheit 30 übertragen werden, um die Datenübertragungsmenge zu reduzieren, d.h., dass der zentralen Bedieneinheit 30 auch Daten, beispielsweise digitale oder analoge Zustände, Qualitätsdaten, Prozessparameter, Variablenwerte, vorzugsweise über OPC UA, aus den angeschlossenen Produktionsmitteln 2 ausgelesen und diese produktionsmittelübergreifend oder arbeitszellenübergreifend aufbereitet bzw. ausgewertet oder in Beziehung gesetzt und dargestellt werden können. Aufgrund der Reduzierung der Datenmenge kann damit die Darstellung der Daten annähernd in Echtzeit erfolgen. Dabei ist beispielsweise auch eine Verarbeitung mittels "machine learning" oder einem "KI-System" oder eine Anzeige der Signale bzw. Daten in Oszilloskop-Darstellung möglich. Dabei ist es auch möglich, dass der Status, Fehlermeldungen usw. von den Produktionsmitteln 2 direkt an die zentrale Bedieneinheit 30 übertragen und angezeigt werden, wobei hierzu vorzugsweise unterschiedliche Farben, wie beispielsweise Rot für Fehlermeldungen, Grün für "alles in Ordnung", Blau für Wartungsarbeiten, usw. angezeigt und dargestellt werden. Dabei kann zum Symbol 33 oder der virtuellen Darstellung des Produktionsmittel 2 eine entsprechende Anzeige vorzugsweise in Form eines Leuchtpunktes dargestellt sein oder es kann auch das gesamte Symbol 33 oder die virtuelle Darstellung des Produktionsmittels 2 in der entsprechenden Farbe angezeigt werden.

Es ist auch möglich, dass der Bediener durch Aktivieren eines entsprechenden Untermenüs sich eine Auflistung aller Produktionsmittel 2 erstellen lässt. Hierbei können alle Produktionsmittel 2 untereinander und vorzugsweise alphabethisch gereiht aufgelistet sein, wobei neben den einzelnen Produktionsmitteln 2 die dazugehörige Arbeitszelle 20 bis 23 angezeigt wird. Es ist aber auch möglich, dass nur eine Liste ausgewertet werden kann, bei der alle Produktionsmittel 2 nur ein einziges Mal angeführt sind und neben oder davor angezeigt wird, wie oft dieser Produktionsmitteltyp eines Produktionsmittels 2 in der Industrieanlage 1 vorhanden ist.

Grundsätzlich ist zu erwähnen, dass bei der dargestellten Ausführungsform die Produktionsmittel 2 in Arbeitszellen 20 bis 23 zusammengefasst sind, was jedoch nicht notwendig ist, sondern es können die Produktionsmittel 2 entsprechend zusammen geschaltet und am Netzwerk 29 angebunden sein. Es ist auch möglich, dass der Betrieb der Produktionsmittel 2 ohne die Arbeitszellensteuerungen 24 bis 27 erfolgt, deren Einsatz jedoch den Vorteil haben, dass die Produktionsmittel 2 automatisch den entsprechenden Arbeitszellen 20 bis 23 zugeordnet werden können.

Der vollständigkeitshalber wird erwähnt, dass sich auch Verknüpfungen zu virtuellen Produktionsmitteln 2 oder virtuellen Arbeitszellen 20 bis 23, die lokal oder in der Cloud bereitgestellt werden, auf der oder den zentralen Bedieneinheiten 30 widerspiegeln, d.h., sollte auf einem Produktionsmittel 2 eine virtuelle Verknüpfung mit einem virtuellen Produktionsmittel 2 hinterlegt bzw. aktiviert sein, so wird auch diese Verknüpfung erkannt und dargestellt. Dies kann vorzugsweise in unterschiedlichen Farben erfolgen, sodass eine derartige Verknüpfung leicht erkennbar ist.

Weiters kann die zentrale Bedieneinheit 30 auch für die Speicherung von Datensätzen, beispielsweise bestehend aus Qualitäts- und Prozessparametern oder diversen Einstellungen, sowie Programmabläufen, Rezepten oder sonstiger Konfigurationen von individuellen Produktionsmitteln oder kompletten Arbeitszellen, verwendet werden.

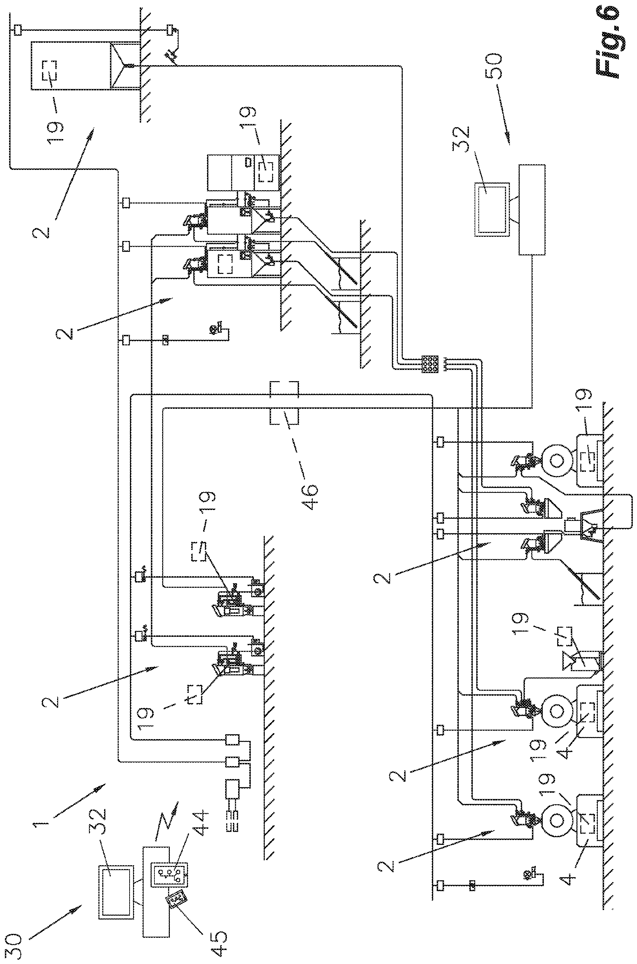

Es ist auch möglich, dass zusätzlich oder anstelle der zentralen Bedieneinheit 30 die Teachbox 18 des Roboters 5 als zentrale Bedieneinheit 30 fungiert und somit vorzugsweise die Visualisierungskomponenten der Produktionsmittel 2 innerhalb der Arbeitszelle 20 bis 23 des Roboters 5 oder auch weiterer Arbeitszellen 20 bis 23 vom Benutzer ausgewählt und auf der Teachbox 18 dargestellt werden können. Dabei ist es auch möglich, dass das Terminal, insbesondere der die Steuerung 19 der Spritzgießmaschine 4 als zentrale Bedieneinheit 30 fungiert und somit vorzugsweise die Visualisierungskomponenten der Produktionsmittel 2 innerhalb der Arbeitszelle 20 bis 23 vom Benutzer ausgewählt und auf dem Terminal 19 dargestellt werden können. Ebenfalls kann die Steuerung der Zentralförderanlage 50, wie beispielsweise in Fig. 6 ersichtlich, als zentrale Bedieneinheit 30 fungieren sodass vorzugsweise die Visualisierungskomponenten der Produktionsmittel 2 der Produktionshalle darauf vom Benutzer ausgewählt und dargestellt werden können.

Durch die virtuelle Darstellung der vorhandenen Produktionsmittel 2 ist es auch möglich, dass die zentrale Bedieneinheit 30 die Verwendung einer 3D-Brille oder virtual reality oder mixed reality Anzeige unterstützt, wobei die Visualisierungskomponenten der Produktionsmittel dem Benutzer im dreidimensionalen Raum angeordnet und angezeigt werden. Vorteilhaft ist hierbei, wenn zuvor der tatsächliche Grundriss der Industrieanlage 1 im System erfasst wird und die Produktionsmittel 2 mit GPS-Daten oder Markern versehen werden, sodass ein Rundgang durch die Industrieanlage 1 virtuell möglich ist. Für eine vereinfachte Erfassung der GPS-Daten bzw. von Standortdaten genügt es, wenn das wesentliche Produktionsmittel 2 nämlich die Spritzgiessmaschine 4 oder die Arbeitszellensteuerung 20 bis 23 erfasst werden, weil deren zugeordnete weitere Produktionsmittel 2 im Umfeld angeordnet sind. Oftmals sind deren virtuelle Darstellungen bereits an die Position zur Spritzgiessmaschine 4 ergänzt, sodass eine einfache Zuordnung erfolgen kann.

Es ist auch möglich, dass ein Produktionsmittel 2, anstatt über eine modular auf der zentralen Bedieneinheit 30 laufende Visualisierungskomponente 101, über eine Spiegelungstechnologie, beispielsweise VNC oder Team Viewer, und/oder über eine Webclienttechnologie, vorzugsweise ein Webbrowserelement, angezeigt und angebunden wird.

Weiters kann der Benutzer die in der Anzeige der zentralen Bedieneinheit 30 zu verwendenden physikalischen Einheiten an der zentralen Bedieneinheit 30 verändern, wobei die ausgewählten physikalischen Einheiten auch automatisch für die in der zentralen Bedieneinheit 30 angezeigten Visualisierungskomponenten 101 der Produktionsmittel 2 verwendet werden bzw. als Voreinstellung fungieren. Auch ist es möglich, dass dem Benutzer von der zentralen Bedieneinheit 30 aus, getriggert durch Ereignisse auf einem oder mehreren der angebundenen Produktionsmittel 2, Nachrichten vorzugsweise über e-mail, Twitter oder SMS, zugesandt werden.

Selbstverständlich ist es möglich, dass auf der zentralen Bedieneinheit 30 verschiedenste Einstellungen, wie Sprache, 2D-Ansicht, 3D-Ansicht, Einheiten, usw. eingestellt werden können, die auch durch entsprechendes Aktivieren eines Übertragungsbuttons an die über das Netzwerk 29 angeschlossenen Produktionsmittel 2 übertragen werden können. Hierbei ist es möglich, dass durch den Touchscreen oder den Mauszeiger 38 ein oder mehrere virtuelle Produktionsmittel 2 selektiert werden können, an die die Einstellungen oder Änderungen übertragen werden. Dabei ist es auch möglich, dass bei Änderungen am Produktionsmittel 2 beispielsweise bei Wartungsarbeiten durch Veränderung der Menüsprache diese Veränderung am virtuellen Produktionsmittel bzw. der Visualisierungskomponente 101 angezeigt wird.

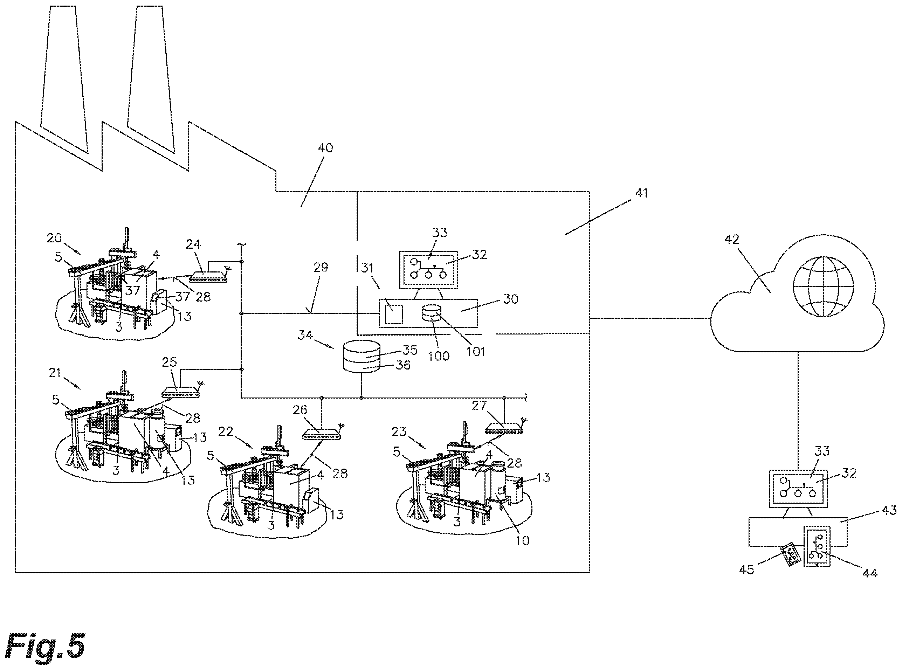

Weiters ist in Fig. 5 eine schematische Darstellung einer kunststoffverarbeitenden Industrieanlage 1 gezeigt, in der in einem oder auch mehreren Firmengebäuden 40 mehrere in Arbeitszellen 20 bis 23 organisierte Produktionsmittel 2 zusammenarbeiten. Dabei umfassen die Produktionsmittel 2 zumindest eine Spritzgießmaschine 4, einen Roboter oder Automatisierungsanlage 5, und vorzugsweise ein oder mehrere Temperiergerät 13, ein oder mehrere Kühlgerät, einen oder mehrere Durchflussregler 14, einen Granulattrockner oder -förderer 10 oder ein oder mehrere Dosiergerät 11 oder eine Arbeitszellensteuerung 24 bis 27. Dabei ist ersichtlich, dass vom Control Room 41, in dem die zentrale Bedieneinheit 30 samt Visualisierungssoftware 31 vorhanden ist, aus, die angeschlossenen Produktionsmittel 2 überwacht, geregelt und gesteuert werden können.

Hierbei wird vorzugsweise nach der Installation bzw. Montage einer neuen Arbeitszelle 24 bis 27 zuerst die Erfassung der Produktionsmittel 2 durchgeführt und die größten Datenmengen heruntergeladen, sodass anschließend nach der Inbetriebnahme der Produktionsmittel 2 lediglich nur mehr ein geringer Datentransfer erforderlich ist, um eine nahezu Echtzeit-Darstellung der Parameter, Soll- / Istwerte usw. im Control-Room 41 zur Verfügung zu haben.

Weiters ist es auch möglich, dass eine globale bzw. weltweite Vernetzung, insbesondere über das Internet 42, des Firmengebäudes 40 möglich ist, sodass zusätzlich eine externe Bedieneinheit 43 integriert bzw. verbunden werden kann. Hierbei wäre es möglich, dass im Firmengebäude 40 die zentrale Bedieneinheit 30 entfallen kann und Steuerung, Regelung und Überwachung auch über die externe Bedieneinheit 43 erfolgen kann. Dabei ist es auch möglich, dass die Darstellung auf einem Tablett 44 oder Mobiltelefon 45 erfolgen kann.

Optional wird die Verbindung mit einer externen Bedieneinheit 43 für Wartungstätigkeiten bzw. Updates der Produktionsmittel 2 auch vom Hersteller der Produktionsmittel 2 genützt, der über das Internet 42 entsprechende Updates zur Verfügung stellen kann. Hierbei ist es auch möglich, dass die externe Bedieneinheit 43 als Server ausgebildet ist, und dass die zentrale Bedieneinheit 30 diesen nutzen kann um Updates, Einstellungen, Bedienermanual, usw. herunter zu laden.

Weiters ist in Fig. 6 eine Kunststoff-Industrieanlage 1 mit einer Zentralförderanlage 50, gezeigt, die die Verteilung und Aufbereitung des Kunststoffgranulats auf die einzelnen Arbeitszellen und Produktionsmittel 2 übernimmt. Es ist ersichtlich, dass für die Überwachung der Anlage, insbesondere der Produktionsmittel 2 mehrere zentrale Bedieneinheiten 30, die räumlich voneinander getrennt sein können, eingesetzt werden. Es wird weiters eine zentrale Bedieneinheit 30 gezeigt, die in die Bedieneinheit der Zentralförderanlage 50 integriert ist. Die Visualisierungskomponenten 101 der Produktionsmittel 2 können damit auch auf der Zentralförderanlage 50 angezeigt und bedient werden, wobei die Zentralförderanlage 50 die Symbole 33 der Produktionsmittel 2 entsprechend ihrer Vernetzung nach unterschiedlichen topologischen Richtlinien oder Filterkriterien, z.B. entsprechend der materialbezogenen Verschlauchung oder der Verschlauchung des Saugsystems oder anhand der elektrischen Verdrahtung, darstellen kann. Indem der Benutzer beispielsweise den Mauszeiger über ein Symbol 33 bewegt kann er die zugehörige Visualisierungskomponente 101 laden, wobei diese entweder, wenn bereits im Cache 100 hinterlegt, direkt aus dem Cache 100 abgerufen wird oder andernfalls von dem Produktionsmittel 2 über das Netzwerk übertragen wird. Vorzugsweise sind die einzelnen Produktionsmittel 2 drahtgebunden verbunden, sodass ein sicherer Datenaustausch stattfinden kann. Im gezeigten Ausführungsbeispiel sind die zentralen Bedieneinheiten 30 über eine drahtlose Verbindung, insbesondere über Wlan, mit einem Produktionsmittel 2 oder einer Wlan-Station 46, wie strichliert angedeutet, verbunden, über die die Daten und Verbindung zu den Produktionsmittel 2 gesendet werden. Über diese Wlan-Station 46 kann auch eine Verbindung mit einem Mobiltelefon 45 oder Tablett 44 direkt zu den Produktionsmitteln 2 hergestellt werden, sodass jederzeit auch die Daten abgerufen und/oder auch entsprechende Steuerungsbefehle ausgeführt werden können.

Wie zuvor bereits kurz erwähnt, werden in den Figuren 4a bis 4c unterschiedliche Bildschirmdarstellungen in unterschiedlichen Anzeigevarianten gezeigt. Hierbei ist aus Fig. 4a zu entnehmen, dass auf der linken Hälfte des Bildschirmes 32 die Visualisierungskomponente 101 eines Produktionsmittels 2, in diesem Beispiel ein Temperiergerät 13, gezeigt wird. Die Titelleiste des Fensters zeigt das zugehörige Symbol 33. Auf der rechten Seite werden Symbol 33 und Visualisierungskomponente 101 eines weiteren Produktionsmittels 2, eines Entnahmeroboters 5, aus der gleichen Arbeitszelle 20 bis 23 angezeigt.

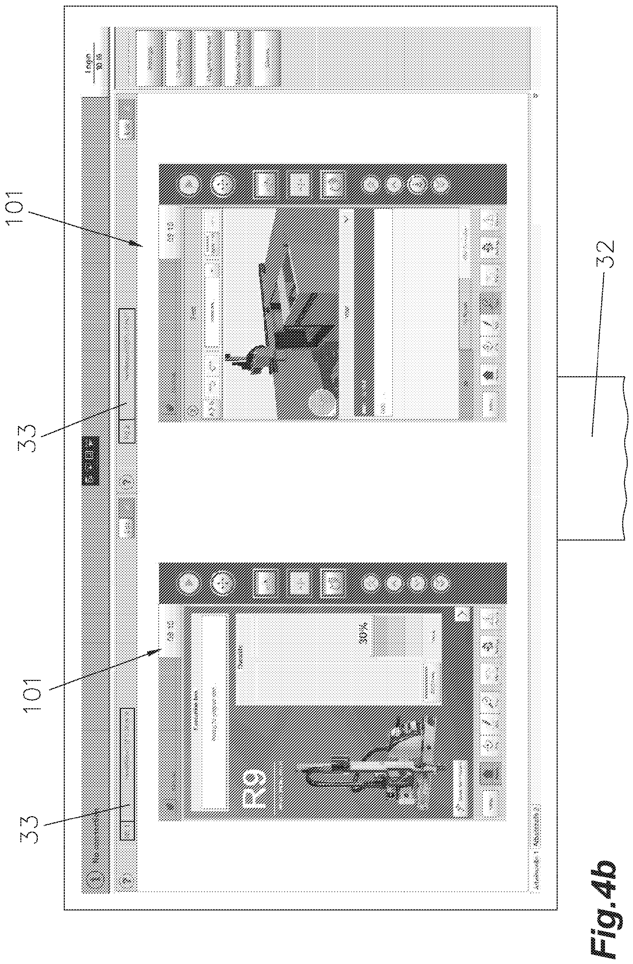

Figur 4b zeigt eine ähnliche Anordnung wie Fig. 4a, allerdings wird hier links und rechts ein- und dasselbe Produktionsmittel 2, ein Entnahmeroboter 5, gezeigt. Die Visualisierungskomponente 101 für diesen einen Roboter 5 wird in diesem Fall zwei Mal geladen bzw. gestartet und einmal links und einmal rechts angezeigt. Es wird damit erreicht, dass sich der Bediener zur gleichen Zeit unterschiedliche Ansichten auf ein- und dasselbe Produktionsmittel 2 auf dem Bildschirm 32 ausgeben lassen kann, womit er eine Vielzahl von Zustandsvariablen gleichzeitig beobachten kann bzw. Auswirkungen von Änderungen auf der einen Seite auf der anderen Seite beobachten kann.

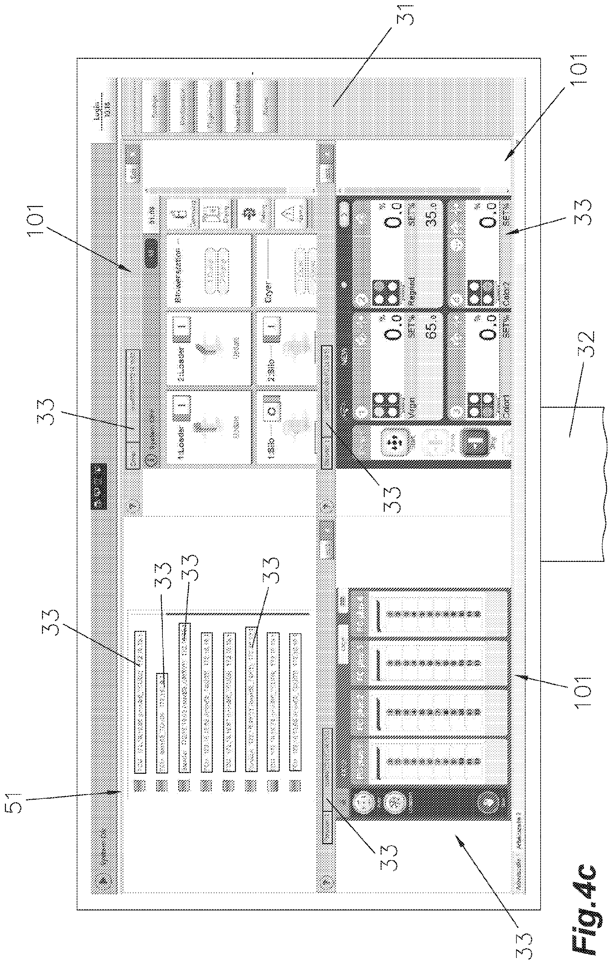

Figur 4c schließlich zeigt links oben eine Übersicht über den Betriebszustand 51 mehrerer ausgewählter Produktionsmittel 2, wobei die Produktionsmittel 2 durch ihr Symbol 33 dargestellt werden. In den 3 weiteren Bereichen werden Visualisierungskomponenten 101 weiterer Produktionsmittel 2, in diesem Fall eines Granulattrockners 10 samt zugehöriger Fördersteuerung, eines Durchflussreglers 14 und eines gravimetrischen Dosiergeräts 11 angezeigt.

Der Bediener kann sich über den Button "Login" rechts oben an der zentralen Bedieneinheit 30 anmelden und die Produktionsmittel 2 über ihre Visualisierungskomponenten 101 hiermit vom Bildschirm 32 der zentralen Bedieneinheit 30 aus entsprechend seinem Benutzerlevel anzeigen lassen und überwachen. Der Benutzerlevel wird hierfür von der Visualisierungssoftware 31 an die Visualisierungskomponenten 101 weitergeben, sodass sich der Bediener nur 1 Passwort für alle Visualisierungskomponenten 101 merken muss bzw. sich nur 1 Mal anmelden muss und dann alle Produktionsmittel 2 über ihre Visualisierungskomponenten 101 bedienen kann.

Der Ordnung halber wird darauf hingewiesen, dass die Erfindung nicht auf die dargestellten Ausführungsvarianten beschränkt ist, sondern auch weitere Ausbildungen und Aufbauten beinhalten können.

## Patentansprüche

1. Verfahren zur Darstellung und Bedienung von Produktionsmitteln (2), insbesondere für die Kunststoffverarbeitende Industrie, auf einer oder mehreren zentralen Bedieneinheiten (30), vorzugsweise einem Computer oder Leitstand, wobei zumindest ein Produktionsmittel (2), beispielsweise eine Spritzgießmaschine (4), ein Roboter oder eine Automatisierungsanlage (5), ein Temperiergerät (13), ein Kühlgerät, ein Durchflussregler (14), ein Granulattrockner oder -förderer (10) oder ein Dosiergerät (11) oder eine Arbeitszellensteuerung (24 bis 27) vorhanden ist, **dadurch gekennzeichnet, dass** auf der zentralen Bedieneinheit (30) Symbole (33) für die über ein Netzwerk (29) angebundenen Produktionsmittel (2) vorhanden und auswählbar sind, wobei nach Auswahl eines oder mehrerer Symbole (33) am Bildschirm (32) der Bedieneinheit (30) eine Visualisierungskomponente (101) aus dem zugehörigen Produktionsmittel (2) auf die Bedieneinheit (30) übertragen und ausgeführt wird und anschließend eine vollständige Darstellung und Bedienung durch die Zusammenarbeit der nun an der Bedieneinheit (30) vorhandenen Visualisierungssoftware dieses Produktionsmittels (31) und der weiterhin dezentral im Produktionsmittel (2) laufenden Steuerungssoftware (37) erfolgt, wobei die Übertragung der Visualisierungskomponente (101) nach Möglichkeit vorzugsweise nur beim ersten Aufruf dieses Produktionsmittels (2) übertragen wird, anschließend in der Bedieneinheit (30) vorzugsweise in einem Cache (100) gespeichert bleibt, um bei der nächsten Auswahl des dem Produktionsmittel (2) zugehörigen Symboles (33) ein schnelleres Ansprechverhalten zu erzielen, wobei sich die Funktionalität aus dem Zusammenspiel von modularer Software, insbesondere der Steuerungssoftware (37), in den Steuerungen (18, 19) der unterschiedlichen Produktionsmittel (2) und der übergeordneten Software, insbesondere der Visualisierungssoftware (31), in der oder den Bedieneinheiten (30) in der Form ergibt, dass nur die Softwaremodule, die für die Visualisierung relevant sind, auf eine externe Bedieneinheit (30), beispielsweise einen Computer, übertragen werden und diese mit den prozessrelevanten Softwaremodulen, die auch weiterhin in der oder den Steuerungen (16) des Produktionsmittels (2) verbleiben, zusammenarbeiten.

2. Verfahren nach Anspruch 1 **dadurch gekennzeichnet, dass** mehrere Instanzen der Visualisierungskomponente (101) bzw. Symbole (33) desselben oder unterschiedlicher Produktionsmittel (2) gleichzeitig auf der zentralen Bedieneinheit (30) unabhängig voneinander laufen, sodass unterschiedliche Bildschirmseiten und somit unterschiedliche Informationen aus der oder den Steuerungen (19) gleichzeitig oder nebeneinander dargestellt werden.

3. Verfahren nach einem der vorhergehenden Ansprüche, **dadurch gekennzeichnet, dass** die Kommunikation zwischen der Visualisierungskomponente (101), insbesondere der Visualisierungssoftware (31), in der Bedieneinheit (30) und der Steuerungssoftware (37) im Produktionsmittel (2) in Teilen oder gänzlich über das Netzwerkprotokoll OPC UA erfolgt.

4. Verfahren nach einem der vorhergehenden Ansprüche, **dadurch gekennzeichnet, dass** sich die Visualisierung des Produktionsmittels (2) auf der zentralen Bedieneinheit (30) dem verfügbaren Platz auf der Anzeigeeinheit bzw. Bildschirm (32) des Computers anpasst oder vom Bediener anpassen lässt und somit auf der zentralen Bedieneinheit (30) mehr oder detailliertere Informationen als auf dem Display des Produktionsmittels (2) selbst dargestellt werden.

5. Verfahren nach einem der vorhergehenden Ansprüche, **dadurch gekennzeichnet, dass** sich die Visualisierung des Produktionsmittels (2) auf der zentralen Bedieneinheit (30) der gegenüber dem Produktionsmittel (2) geänderten Hardwareumgebung, beispielsweise unterschiedlicher Laufwerke oder Speichersysteme, auf der Anzeigeeinheit des Computers anpasst und somit dem Benutzer auf der zentralen Bedieneinheit (30) andere, eingeschränkte oder erweiterte Speicherorte angeboten werden als auf dem Display des Produktionsmittels (2).

6. Verfahren nach einem der vorhergehenden Ansprüche, **dadurch gekennzeichnet, dass** bei Entfernen oder Hinzufügen eines Produktionsmittels (2) im Netzwerk, insbesondere eines mobilen Peripheriegerätes, beispielsweise eines Temperiergerätes (13), Granulattrockners (10) oder -förderers (9), Dosiergerätes (11), etc. auf Grund von geändertem Bedarf für die Produktion eines Spritzgiessteils (3), eine entsprechende automatische Anpassung der Darstellung der Symbole (33) an der oder den zentralen Bedieneinheiten (30) erfolgt oder zur Anzeige oder Kommunikation angeboten werden.

7. Verfahren nach einem der vorhergehenden Ansprüche, **dadurch gekennzeichnet, dass** Verknüpfungen von Produktionsmitteln (2) zu physischen Produktionszellen bzw. Arbeitszellen (20 bis 23), die sich aus der Netzwerktopologie ergeben und sich jederzeit neu ergeben können, sich auch auf der oder den zentralen Bedieneinheiten (30) widerspiegeln.

8. Verfahren nach einem der vorhergehenden Ansprüche, **dadurch gekennzeichnet, dass** die Software, insbesondere die Visualisierungssoftware (31), der zentralen Bedieneinheit (30) auch Daten, beispielsweise digitale oder analoge Zustände, Qualitätsdaten, Prozessparameter, Variablenwerte, vorzugsweise über OPC UA aus den angeschlossenen Produktionsmitteln (2) auslesen kann und diese produktionsmittelübergreifend oder arbeitszellenübergreifend aufbereiten, auswerten, in Beziehung setzen, darstellen oder speichern kann.

9. Verfahren nach einem der vorhergehenden Ansprüche, **dadurch gekennzeichnet, dass** die Software, insbesondere die Visualisierungssoftware (31), der zentralen Bedieneinheit (30) auch Alarme oder Fehlermeldungen oder Benutzerinteraktionen, vorzugsweise über OPC UA, aus den angeschlossenen Produktionsmitteln (2) auslesen kann und diese produktionsmittelübergreifend oder arbeitszellenübergreifend aufbereiten, auswerten, in Beziehung setzen, darstellen oder speichern kann.

10. Verfahren nach einem der vorhergehenden Ansprüche, **dadurch gekennzeichnet, dass** sich ein Benutzer an der zentralen Bedieneinheit (30) mit einem Benutzerlevel anmelden kann und der damit verbundene Benutzerlevel automatisch, oder nach einer vorgegebenen aber anpassbaren, Zuordnungstabelle auf die Benutzerlevel der Visualisierungskomponente (101) der Produktionsmittel (2) übertragen wird.

11. Verfahren nach einem der vorhergehenden Ansprüche, **dadurch gekennzeichnet, dass** der Benutzer die Anzeigesprache der zentralen Bedieneinheit (30) an der zentralen Bedieneinheit (30) verändern kann, wobei die ausgewählte Sprache auch automatisch für die in der zentralen Bedieneinheit (30) angezeigten Visualisierungskomponenten (101) der Produktionsmittel (2) verwendet wird bzw. als Voreinstellung fungiert.

12. Verfahren nach einem der vorhergehenden Ansprüche, **dadurch gekennzeichnet, dass** auf der zentralen Bedieneinheit (30) eine konfigurierbare oder automatisch konfigurierte Übersicht über die Zustände, beispielsweise den Betriebszustand, der angeschlossene Produktionsmittel (2) dargestellt wird.

13. Verfahren nach einem der vorhergehenden Ansprüche, **dadurch gekennzeichnet, dass** von der zentralen Bedieneinheit aus ein Softwareupdate der angeschlossenen Produktionsmittel angestoßen werden kann.

## Claims

1. Method for displaying and operating production resources (2), in particular for the plastics-processing industry, on one or more central operating units (30), preferably a computer or control station, wherein at least one production resource (2), for example an injection molding machine (4), a robot or an automation system (5), a temperature control unit (13), a cooling unit, a flow controller (14), a granulate dryer or conveyor (10) or a metering unit (11) or a work cell controller (24 to 27) is present, **characterized in that** symbols (33) for the production resources (2) connected via a network (29) are present on the central operating unit (30) and can be selected, wherein, after selection of one or several symbols (33) on the screen (32) of the operating unit (30), a visualization component (101) is transferred from the associated production resource (2) to the operating unit (30) and executed there, and subsequently a complete display and operation is effected by the cooperation of the visualization software of this production resource (31) now present on the operating unit (30) and the control software (37) which continues to run in a decentralized manner in the production resource (2), wherein transmission of the visualization component (101) is transmitted, if possible, preferably only upon first invocation of this production resource (2), then remains stored in the control unit (30) preferably in a cache (100) in order to achieve a faster response behavior at the next selection of the symbol (33) associated with the production resource (2), wherein the functionality results from the interaction of modular software, in particular the control software (37), in the controls (18, 19) of the individual production resource (2) and the superordinate software, in particular the visualization software (31), in the operating unit or units (30) in such a way that only the software modules relevant for the visualization are transferred to an external operating unit (30), for example a computer, and these cooperate with the process-relevant software modules which continue to remain in the control or controls (16) of the production resource (2).

2. Method according to claim 1, **characterized in that** multiple instances of the visualization component (101) or symbols (33), respectively, of the same or different production resources (2) run simultaneously on the central operating unit (30) independently of one another, so that different screen pages and thus different information items from the controller or controllers (19) are displayed simultaneously or side by side.

3. Method according to any one of the preceding claims, **characterized in that** the communication between the visualization component (101), in particular the visualization software (31), in the operating unit (30) and the control software (37) in the production resource (2) is carried out in parts or entirely via the OPC UA network protocol.

4. Method according to any one of the preceding claims, **characterized in that** the visualization of the production resource (2) on the central operating unit (30) is adapted to the available space on the display unit or screen, respectively, (32) of the computer or can be adapted by the operator, and thus more or more detailed information is displayed on the central operating unit (30) than on the display of the production resource (2) itself.

5. Method according to any one of the preceding claims, **characterized in that** the visualization of the production resource (2) on the central operating unit (30) adapts to the hardware environment, for example different drives or storage systems, on the display unit of the computer, which has changed with respect to the production resource (2), and thus different, restricted or extended storage locations are offered to the user on the central operating unit (30) than are on the display of the production resource (2).

6. Method according to any one of the preceding claims, **characterized in that**, whenever a production resource (2) in the network, in particular a mobile peripheral device, for example a temperature control unit (13), granule dryer (10) or conveyor (9), metering unit (11), etc., is removed or added on the basis of changed requirements for the production of an injection-molded part (3), a corresponding automatic adaptation of the presentation of the symbols (33) takes place on the central operating unit or units (30) or is offered for display or communication.

7. Method according to any one of the preceding claims, **characterized in that** links of production resources (2) to physical production cells or work cells, respectively (20 to 23), which result from the network topology and can be newly formed at any time, are also reflected on the central operating unit or units (30).

8. Method according to any one of the preceding claims, **characterized in that** the software, in particular the visualization software (31), of the central operating unit (30) can also read data, for example digital or analog states, quality data, process parameters, variable values, preferably via OPC UA, from the connected production resources (2) and process, evaluate, correlate, display or store them across production resources or across work cells.

9. Method according to any one of the preceding claims, **characterized in that** the software, in particular the visualization software (31), of the central operating unit (30) can also read alarms or error messages or user interactions, preferably via OPC UA, from the connected production resources (2) and process, evaluate, correlate, display or store them across production resources or across work cells.

10. Method according to any one of the preceding claims, **characterized in that** a user can log on to the central operating unit (30) with a user level, and the user level associated therewith is transferred automatically, or according to a predetermined but adaptable assignment table, to the user levels of the visualization component (101) of the production resources (2).

11. Method according to any one of the preceding claims, **characterized in that** the user can change the display language of the central operating unit (30) at the central operating unit (30), wherein the selected language is automatically used also for the visualization components (101) of the production resources (2) displayed in the central operating unit (30) or acts as a default setting, respectively.

12. Method according to any one of the preceding claims, **characterized in that** a configurable or automatically configured overview of the states, for example the operating status, of the connected production resources (2) is displayed on the central operating unit (30).

13. Method according to any one of the preceding claims, **characterized in that** a software update of the connected production resources can be triggered from the central operating unit.

## Revendications

1. Procédé pour la représentation et l'utilisation de moyens de production (2), en particulier pour l'industrie de transformation des matières plastiques, sur une ou plusieurs unités de commande centrales (30), de préférence un ordinateur ou un poste de contrôle, au moins un moyen de production (2), par exemple une machine de moulage par injection (4), un robot ou une installation d'automatisation (5), un thermorégulateur (13), un appareil de refroidissement, un régulateur de débit (14), un séchoir ou un convoyeur à granulés (10) ou un appareil de dosage (11) ou une commande de cellule de travail (24 à 27) étant disponible, **caractérisé en ce que** des symboles (33) sont disponibles sur l'unité de commande centrale (30) pour les moyens de production (2) reliés par un réseau (29) et peuvent y être sélectionnés, un composant de visualisation (101) étant transféré à l'unité de commande (30) et exécuté à partir du moyen de production (2) associé après sélection d'un ou de plusieurs symboles (33) sur l'écran (32) de l'unité de commande (30), et qu'une représentation et une commande complètes sont ensuite effectuées par la collaboration du logiciel de visualisation de ce moyen de production (31), maintenant disponible sur l'unité de commande (30), et du logiciel de commande (37) continuant à fonctionner de manière décentralisée sur le moyen de production (2), la transmission du composant de visualisation (101) n'étant transmise, si possible, de préférence que lors du premier appel de ce moyen de production (2), restant ensuite enregistrée sur l'unité de commande (30), de préférence dans une mémoire cache (100), afin d'obtenir un comportement de réponse plus rapide lors de la prochaine sélection du symbole (33) associé au moyen de production (2), la fonctionnalité résultant de l'interaction entre le logiciel modulaire, en particulier le logiciel de commande (37), sur les commandes (18, 19) des différents moyens de production (2) et du logiciel de niveau supérieur, notamment du logiciel de visualisation (31), dans la ou les unités de commande (30), de telle sorte que seuls les modules logiciels qui sont pertinents pour la visualisation sont transférés sur une unité de commande externe (30), par exemple un ordinateur, et que ceux-ci collaborent avec les modules logiciels pertinents pour le processus, qui restent également dans la ou les commandes (16) du moyen de production (2).

2. Procédé selon la revendication 1, **caractérisé en ce que** plusieurs instances du composant de visualisation (101) ou des symboles (33) du même moyen de production (2) ou de moyens de production différents fonctionnent simultanément sur l'unité de commande centrale (30), indépendamment les unes des autres, de sorte que différentes pages d'écran et donc différentes informations provenant du ou des commandes (19) sont affichées simultanément ou les unes à côté des autres.

3. Procédé selon l'une des revendications précédentes, **caractérisé en ce que** la communication entre le composant de visualisation (101), en particulier le logiciel de visualisation (31), dans l'unité de commande (30) et le logiciel de commande (37) dans le moyen de production (2) s'effectue, en partie ou en totalité, via le protocole de réseau OPC UA.

4. Procédé selon l'une des revendications précédentes, **caractérisé en ce que** la visualisation du moyen de production (2) sur l'unité de commande centrale (30) s'adapte à l'espace disponible sur l'unité d'affichage ou l'écran (32) de l'ordinateur ou peut être adaptée par l'opérateur et que, par conséquent, un plus grande nombre d'informations ou des informations plus détaillées sont affichées sur l'unité de commande centrale (30) que sur l'écran du moyen de production (2) même.

5. Procédé selon l'une des revendications précédentes, **caractérisé en ce que** la visualisation du moyen de production (2) sur l'unité de commande centrale (30) s'adapte à l'environnement matériel modifié par rapport au moyen de production (2), par exemple à différents lecteurs ou systèmes d'enregistrement, sur l'unité d'affichage de l'ordinateur, et que, par conséquent, des emplacements de stockage différents, limités ou étendus sont proposés à l'utilisateur sur l'unité de commande centrale (30) par rapport à ceux sur l'écran du moyen de production (2).

6. Procédé selon l'une des revendications précédentes, **caractérisé en ce que**, lors de la suppression ou de l'ajout d'un moyen de production (2) dans le réseau, en particulier d'un appareil périphérique mobile, comme un thermorégulateur (13), un séchoir (10) ou convoyeur (9) à granulés, un appareil de dosage (11), etc., en raison d'une modification des besoins pour la production d'une pièce moulée par injection (3), une adaptation automatique correspondante de la représentation des symboles (33) est effectuée sur la ou les unités de commande centrales (30) ou est proposée en vue de l'affichage ou de la communication.

7. Procédé selon l'une des revendications précédentes, **caractérisé en ce que** des liaisons entre les moyens de production (2) et les cellules de production physiques ou des cellules de travail (20 à 23), qui résultent de la topologie du réseau et peuvent se renouveler à tout moment, se reflètent également sur la ou les unités de commande centrales (30).

8. Procédé selon l'une des revendications précédentes, **caractérisé en ce que** le logiciel, en particulier le logiciel de visualisation (31), de l'unité de commande centrale (30) peut également lire des données, par exemple des états numériques ou analogiques, des données de qualité, des paramètres de processus, des valeurs de variables, de préférence via OPC UA, à partir des moyens de production (2) associés et peut préparer, évaluer, mettre en relation, représenter ou enregistrer ces données pour l'ensemble des moyens de production ou pour l'ensemble des cellules de travail.

9. Procédé selon l'une des revendications précédentes, **caractérisé en ce que** le logiciel, en particulier le logiciel de visualisation (31), de l'unité de commande centrale (30) peut également lire des alarmes ou des messages d'erreur ou des interactions d'utilisateur, de préférence via OPC UA, à partir des moyens de production (2) associés et les préparer, évaluer, mettre en relation, représenter ou enregistrer pour l'ensemble des moyens de production ou pour l'ensemble des cellules de travail.

10. Procédé selon l'une des revendications précédentes, **caractérisé en ce qu'**un utilisateur peut se connecter à l'unité de commande centrale (30) avec un niveau d'utilisateur et que le niveau d'utilisateur associé est transféré automatiquement, ou selon un tableau de correspondance prédéfini mais adaptable, aux niveaux d'utilisateur du composant de visualisation (101) des moyens de production (2).

11. Procédé selon l'une des revendications précédentes, **caractérisé en ce que** l'utilisateur peut modifier la langue d'affichage de l'unité de commande centrale (30) sur l'unité de commande centrale (30), la langue sélectionnée étant également employée automatiquement pour les composants de visualisation (101) des moyens de production (2) affichés sur l'unité de commande centrale (30) ou faisant office de valeur par défaut.

12. Procédé selon l'une des revendications précédentes, **caractérisé en ce qu'**une vue d'ensemble configurable ou configurée automatiquement des états, par exemple de l'état de service, des moyens de production (2) associés est représentée sur l'unité de commande centrale (30).

13. Procédé selon l'une des revendications précédentes, **caractérisé en ce qu'**une mise à jour du logiciel des moyens de production associés peut être déclenchée à partir de l'unité de commande centrale.
